# EUROPEAN PATENT SPECIFICATION

(11) **EP 2 895 576 B1**
(45) Date of publication and mention of the grant of the patent: **17.08.2016**
(21) Application number: 12759701.1
(22) Date of filing: 14.09.2012
(51) Int. Cl.: C10G 1/10, C10B 53/07, C10B 49/16, C07C 4/22, C08J 11/12, C10B 1/10, C10K 1/02

(54) **METHOD AND APPARATUS FOR RECYCLING PLASTIC WASTES**
VERFAHREN UND VORRICHTUNG ZUR WIEDERVERWERTUNG VON KUNSTSTOFFABFÄLLEN
PROCÉDÉ ET APPAREIL DE RECYCLAGE DES DÉCHETS PLASTIQUES

(43) Date of publication of application: 22.07.2015
(73) Proprietor: Outotec (Finland) Oy, 02230 Espoo (FI)
(72) Inventor: SCHAAF, Tanja, 60439 Frankfurt am Main (DE); BINDER, Christian, 60318 Frankfurt am Main (DE); ANASTASIJEVIC, Nikola, 63674 Altenstadt (DE); SCHNEIDER, Günter, 64653 Lorsch (DE)
(74) Representative: Keil & Schaafhausen Patent- und Rechtsanwälte PartGmbB
(86) International application number: PCT/EP2012/068093
(87) International publication number: WO 2014/040634

(56) References cited:
- EP-A1- 0 687 692
- JP-A- H0 971 684
- JP-A- H1 192 590
- US-A- 4 584 421
- US-A1- 2007 173 673

## Description

This invention relates to a method for recycling plastic wastes which contain at least 80 wt-% of polymethyl methacrylate, polypropylene, polyethylene, polystyrene, polyethylene, polyethylene terephthalate, polytetrafluoroethylene or mixtures thereof, and to a plant for carrying out the method.

In modern industrial society, plastics play an important role and above all can be found in packaging materials. Back in the year 2000 already, the total plastic production worldwide amounted to 150 million tons, and in Europe alone 45 million tons were required. Due to this continuously rising consumption of plastics, the amount of plastic wastes produced also is rising continuously. These plastic wastes are problematic in two respects.

On the one hand, plastics contain important compounds which above all are produced from fossil resources, so that when dumping the wastes, these starting substances are withdrawn from the raw material cycle. In times of increasing shortage of resources, such use of raw materials accelerates the decrease of important starting substances.

On the other hand, a multitude of plastics are decomposed only with difficulty, so that when the plastic wastes are dumped, they are preserved over many years and decades. In general, combustion of plastic wastes cannot be carried out in an energy-efficient way and due to the impurities contained therein is also problematic as regards the resulting waste gases.

A recycling of plastic wastes therefore is expedient. It is problematic that the plastics are divided into the three large groups of thermoplastics, thermosets and elastomers, wherein only the thermoplastics can be molten again and thus are newly deformable. For the thermosets and the elastomers a direct recycling is not possible. A recycling of such plastic wastes hence can only consist in breaking up the macromolecular structures and thus retain smaller fragments. Such breaking up can be effected by hydrolysis, alcoholysis, hydrogenation or pyrolysis.

Hydrolysis is referred to as selective reaction of water molecules with a molecule, which leads to a cleavage of the molecule. In the process, a hydrogen atom is (formally) released to a first chain of the compound to be split and the remaining hydroxyl residue is (formally) bound to the other chain of the bond formally to be split. For carrying out such a reaction, steam generally is used at a pressure of up to 30 bar, whereby polyamides, polyesters, polycarbonates, etc. can be split under these conditions.

The hydrolysis normally is carried out at elevated pressure (400 bar) and elevated temperature (500 °C) in the presence of a cobalt-molybdenum catalyst. Hydrogen is added to the C-C bond of polyolefins and polystyrenes, so that the C-C bond inside the respective macromolecule will break.

The so-called alcoholysis represents a method whose course of reaction substantially corresponds to that of the hydrolysis, wherein the remaining alcohol now is the alcohol after splitting off the hydrogen atom of the OH group. Since alcohols are much more expensive than water, this reaction so far has hardly any technical importance.

Pyrolysis is referred to as the chemical and thermal decomposition of a material in the complete or partial absence of air. The products obtained are so-called pyrolysis oils or gases, which can be reused as energy carriers or also as chemical starting substances.

The US 4,584,421 discloses a process and apparatus for the thermal decomposition of plastic scraps in the presence of a zeolite type catalyst and their conversion into a liquid hydrocarbon oil.

The US 2007/0173673 A1 discloses a method for catalytically cracking waste plastics wherein waste plastics are loaded as a raw material into a granular catalyst heated to a temperature range from 350°C to 500°C inside a reaction vessel, thereby decomposing and gasifying the waste plastics in contact with the catalyst.

The EP 0 687 692 A1 describes a process for thermally cracking waste polymers comprising chlorinated polymers in a reactor, whereby the cracked products emerging from the fluidized bed are passed through one or more guard beds comprising calcium oxide.

The JP 11-092590 discloses a processing method of waste containing foamed plastics containing chlorofluorocarbon compounds by pyrolysis and subsequent cooling of the gaseous hydrocarbons to obtain different oil fractions.

The article "Plastics, Recycling" by Walter Kaminsky, 2005, Wiley-VCH Verlag GmbH & Co. KGaA, Weinheim, provides a comprehensive description of the possible methods for the cleavage of bonds in polymers.

WO 88/02284 A describes a method in which plastic wastes in solid and/or liquid form are mixed with a binder and formed to pellets. These pellets subsequently are supplied to a furnace with a pyrolysis zone and at least partly gasified there. Subsequently, the remaining solids are transferred into an oxidation zone of the furnace, before they pass a sintering zone.

Styrene monomers can be recovered from impact-resistant polystyrene, when the polystyrene, as described in DE 100 31 643 A1, is comminuted and mixed with a sulfate and/or manganese dioxide as catalyst. Subsequently, the solids mixture is heated, whereby a largely thermal decomposition of the polystyrene occurs. The monomers obtained subsequently can be condensed out.

US 7,626,062 describes a method for recycling plastic wastes, in which a catalyst which contains iridium, manganese, gold, silver or other metals and their oxides, together with the plastic wastes and a reaction fluid, such as oil, is processed to a slurry and subsequently heated in a vacuum such that the individual macromolecules of the plastic are split into their monomers.

DE 199 28 645 A1 describes a method for recovering styrene, in which the same is first molten by heating and subsequently continuously supplied to a pyrolysis device. There, it is heated to a temperature of 400 to 600 °C at a pressure of 0.026 to 0.133 bar. There are formed gases which among other things contain styrene, which can be separated by distillation.

US 2010/0133085 A1 describes a method for recycling plastics, in which the shredded, solid plastic material is filled into a rotary kiln and heated at atmospheric pressure +/- 0.075 bar and temperatures between 400 and 800 °C, so that individual monomers are formed by breaking up the polymers.

EP 0 649 827 A1 likewise describes a method for recovering styrene from polystyrene, in which the plastic waste in liquid or solid form is conveyed into a fluidized bed heated up to 400 to 700 °C and cracked or depolymerized there at a mean residence time of less than 60 sec, wherein the styrene can be recovered from the gaseous cracking products. As heat transfer medium in the fluidized bed a magnesium or aluminum silicate is used.

JP 2005314315 A likewise describes the recovery of styrene, wherein a solution containing polystyrene is supplied to a pyrolysis device, in which the solution is heated to a temperature at which the polystyrene is cracked and thus styrene is obtained.

The article "Chemical recycling of waste polyethylene and polypropylene" by N. Miskolczy, L. Bartha, Gy. Deák and B. Jóver from "Petroleum and Coal", Vol. 45, 3-4, pp. 125-130, reveals that polyethylene can be cracked already by heating the polymer to 525 °C with comparatively long residence times (0.6, 0.9 and 1.2 h).

All methods have in common that they can only be carried out with very clean starting substances. Plastics, however, mostly are material mixtures and in addition often reinforced or filled with other materials, strongly soiled or have a modified molecular structure to prevent a decomposition. The described methods, with which plastics can again be decomposed into their starting substances, above all hydrocarbons, therefore require an upstream expensive cleaning of the plastics.

US 5,335,786 for example describes a cleaning method in which plastic wastes are shredded to small parts, subsequently removed in metallic particles via a magnetic separator, before the plastic then is supplied to a hot steam cleaning system. Subsequently, pellets are formed from the small plastic parts, before they are supplied to the actual recycling method.

Such cleaning methods are expensive and render the recycling of the plastic wastes economically unprofitable.

Therefore, it is the object underlying the invention to provide a method and an apparatus by means of which even more strongly soiled and/or modified polymers can be split into their monomers.

In accordance with the invention, this object is solved with the features of claim 1. Accordingly, plastic wastes which contain polymethyl methacrylate (PMMA), polypropylene (PP) and polyethylene (PE), polystyrene (PS), polyethylene terephthalate (PET), polytetrafluoroethylene (PTFE) or mixtures of these polymers first are heated to a temperature at which they are flowable. Typically these are the melting points of the respective compounds. For polymethyl methacrylate the same lie between 100 and 150 °C, for polypropylene between 150 and 200 °C, for polystyrene between 220 and 270 °C, for polyethylene between 130 and 150°C, for polyethylene terephthalate between 250 and 320 °C and for polytetrafluoroethylene between 320 and 340 °C.

The feed in this first method step has a composition of 85 wt-%, preferably 90 wt-% of said polymers. Preferably, the impurities are at about a maximum of 10 wt-%. A maximum of 7, preferably 5 wt-% of the impurities can be organic substances, and it was found to be particularly favorable that a maximum of 5 wt-% of the impurities are polyvinyl chloride (PVC). So-called substitute fuels (SF) can also be used, if their composition lies within said ranges.

The material thus obtained is liquefied in a first method step, whereby agglutinations and/or the accretion of plastics during the transport to the actual recycling can be prevented. At the same time, the feed system thus can simply be put under the required reaction pressure, which would be more difficult with a feed containing solids.

In a second method step, the heated plastic then is pyrolyzed in a reactor, preferably a rotary kiln, together with a catalyst and/or an adsorber, i.e. it is heated to its decomposition temperature. The resulting gases are withdrawn.

In the third method step, the gases withdrawn are partly condensed. According to the invention, this is effected in two or more stages, wherein the condensation conditions in detail depend on the starting material used and on the monomers resulting therefrom. For the production of monomers from the mixture of polymers, individual temperatures for example can be chosen for each condensation stage, so that only one monomer is condensed in the respective stage. When the decomposition of the polymers is not carried out with the purpose to obtain pure monomers, but when the decomposition products of the pyrolysis are to be supplied to an energetic use only as substitute fuel, it is recommendable to condense in at least two stages and thus separate the components with a high boiling point from those with a low boiling point.

When starting substances with a relatively high degree of impurity are used, it was found to be favorable to filter the liquefied plastic wastes after the method step (i) and before the actual pyrolization (method step (ii)). This represents a very simple way of cleaning and reliably separates metals, non-molten plastics and the like. Of course, this does not exclude that before the first method step or also between heating and pyrolyzing other cleaning steps can be performed, such as passing through a magnetic separator for separately separating metallic components or also an upstream feed processing, in which the plastics used for example are shredded and/or pelletized.

An advantageous embodiment of the invention furthermore provides that during and/or after heating hydrochloric acid is withdrawn. Hydrochloric acid in particular is obtained when PVC was present as impurity in the plastics used. Hydrochloric acid present must be withdrawn, as otherwise all succeeding plant sections are damaged by the hot acid. During the pyrolization, hydrochloric acid also can lead to undesired reactions of the monomers with each other.

In principle, Si₂O₃, metals or metal oxides are suitable as catalyst. What is particularly preferred is the use of a catalyst which for at least 90 wt-% consists of zeolites with metallic cations, as with them the yield and purity of the monomers obtained can distinctly be improved and the reaction time is reduced at the same time. In particular the use of a catalyst, which for at least 90 wt-% consists of the zeolite ZSM-5 (preferably with sodium as the cation) and preferably is used in a ratio of 18:1 based on the plastic-to-catalyst ratio, or the use of a catalyst which for at least 90 wt-% consists of the zeolite MCM-41 (being composed of amorphous silica wall, but featuring long range ordered framework with uniform mesopores) and preferably is used in a ratio of 36:1 based on the plastic-to-catalyst ratio, leads to very good results. Also FCC catalyst can be used, which are much cheaper.

As adsorber, porous materials can be used in principle, which contain calcium, magnesium, iron, potassium or sodium, such as calcium oxide or calcium aluminum silicates, lime sludge, aluminates, silicates as well as lime. It was found to be particularly favorable to use an adsorber which for at least 90 wt-% consists of calcium oxide and/or magnesium oxide, wherein the feed preferably is to be adjusted in a ratio of 1:1 to 100:1 based on the ratio of plastic to adsorber. By means of this adsorber, further impurities which were contained in the feed material can reliably be removed from the reaction mixture. In particular calcium oxide and magnesium oxide are characterized in that sulfur and chlorine compounds can thus be removed.

Furthermore, it was found to be favorable to carry out the pyrolization between 350 and 500 °C at atmospheric pressure. Compared to high pressure vessels, atmospheric pressure vessels are cheaper.

In a development of the invention, the catalyst and/or the adsorber are separated before, during or after the condensation and recirculated into the reactor. Due to the continuous discharge from the reactor, at least smaller particles are entrained by the gas stream withdrawn. Therefore, it is expedient to use a gassolids separator and/or a cyclone; instead or in addition, an electric separator can also be used. Due to the recirculation it can be ensured that the method also can be operated continuously, without the occurrence of a considerable loss of catalyst and adsorber. Without such recirculation, the reaction could not be carried out in an economically expedient way.

A particularly preferred embodiment of the invention provides that within this recirculation a regeneration of the catalyst and/or the adsorber is performed. The adsorber in particular adsorbs impurities which are introduced by the plastic wastes. To a small extent, such adsorption and/or absorption also is effected on the catalyst. By regenerating the materials within the recirculation, the service lives of catalyst and/or adsorber hence can be prolonged distinctly.

Initially, regeneration occurred in conventional combustion, with dense bed temperatures well below 700 °C, more typically around 650 °C. Coke deposits in the catalyst and/or the adsorber are burned roughly equally into CO and CO₂ in the dense phase, with some additional CO combustion occurring in the dilute phase, called "afterburning". A typical CO₂/CO ratio in the flue gas would be around unity with excess oxygen less than 0.5 vol-%. A CO boiler is normally employed to reduce CO to acceptable levels and recover the remaining energy from the flue gas. Combustion in the CO boiler can be carefully controlled; with proper hardware and conditions NOₓ emissions can be minimized to well below 100 ppm in a modern boiler.

As described already, it is expedient to perform the condensation in several stages, since the product mixture thus obtained can already be separated into its individual fractions during the condensation, without a further expensive cleaning being required. In particular, according to the invention when the gas is withdrawn from the respective condensation stage, it is first supplied to a solids separator, before it is subsequently guided into the next condensation stage. Thus, it can reliably be ensured that there is no loss of catalyst and/or adsorber within the system. In particular, the use of an electrostatic dust separator is recommendable here as solids separator, as in this way particles with a very small diameter (< 100 µm) can also reliably and almost completely be removed.

The invention furthermore comprises an apparatus with the features of claim 9. Accordingly, plastic wastes which contain at least 80 wt-%, preferably 90 wt-% of polymethyl methacrylate, polypropylene, polystyrene, polyethylene terephthalate, polytetrafluoroethylene or mixtures of these polymers are recycled. Such recycling apparatus comprises a device for heating the plastic wastes to a temperature at which these plastic wastes are flowable. Furthermore, this apparatus comprises a reactor for pyrolyzing the liquid plastic wastes together with a catalyst and/or an adsorber, wherein the reactor includes an outlet for resulting gases. Finally, the apparatus comprises a condenser for condensing the gases withdrawn from the reactor.

It was found to be favorable when the device for heating/melting is an extruder. Extruders are conveying devices which according to the operating principle of the screw conveyor uniformly press out solid to (semi-)liquid masses from a forming opening under high pressure and high temperature. This method is referred to as extrusion. In such an apparatus, an agglutination or accretion of the plastic wastes used can reliably be avoided and the plastic can be conveyed at the same time.

By using a rotary kiln as reactor, the method according to the invention can be carried out economically. When a fluidized-bed reactor is used as reactor, the use of a catalyst and/or an adsorber is distinctly more difficult, as due to the fluidized bed these particles are exposed to a strong mechanical abrasion and thus even with a recirculation and an involved regeneration the service lives of catalysts and/or adsorbers are short. It is also problematic that due to the high gas quantities, which result from the fluidization of the particles by a fluidizing gas, together with the resulting gases, distinctly larger gas streams must be processed further, whereby the plant would have to be dimensioned much larger. In addition, a complete condensation of individual monomer fractions is only hardly possible due to a very high dilution with the fluidizing gas.

In a preferred embodiment of the invention, the rotary kiln includes a bed of molded bodies, preferably balls. This bed of molded or packing bodies provides for a better heat transfer when the rotary kiln is heated indirectly. Thus, local hot spots, at which undesired side reactions take place and/or the catalyst is irreversibly damaged, can be avoided. It was found to be favorable when the packing bodies of the bed take up between 10 and 50 %, preferably between 40 and 50 % of the total volume of the rotary kiln. The higher the degree of filling in the rotary kiln, the larger the heat buffer for the pyrolysis and the shorter the residence time of the hydrocarbons produced. Advantages of the use of an indirectly heated bed include the improvement of the transport in the rotary kiln, a more homogeneous and more effective temperature distribution inside the furnace, a self-cleaning mechanism, and the possibility to clean the resulting gases by using a catalyst and/or adsorber or to accelerate the reaction or render the same more selective.

The bed contains at least 50, preferably 80 and particularly preferably 90 wt-% of sand. A typical composition of the bed provides an amount of adsorber between 0.01 wt-% and 20 wt-%, an amount of catalyst between 0.01 wt-% and 30 wt-%, and an amount of sand between 50 wt-% and 99.98 wt-%. Sand offers the advantage that it is inert to all substances involved or occurring in the reaction, the individual SiO₂ particles have a good size as molded bodies, the material is available at low cost and has good heat transfer coefficients.

It was found to be particularly favorable when the reactor, which preferably is designed as rotary kiln, is divided into various heating zones, so that here the course of the reaction can be controlled locally.

Further features, advantages and possible applications of the invention can also be taken from the following description of the drawing and an exemplary embodiment.

### In the drawing:

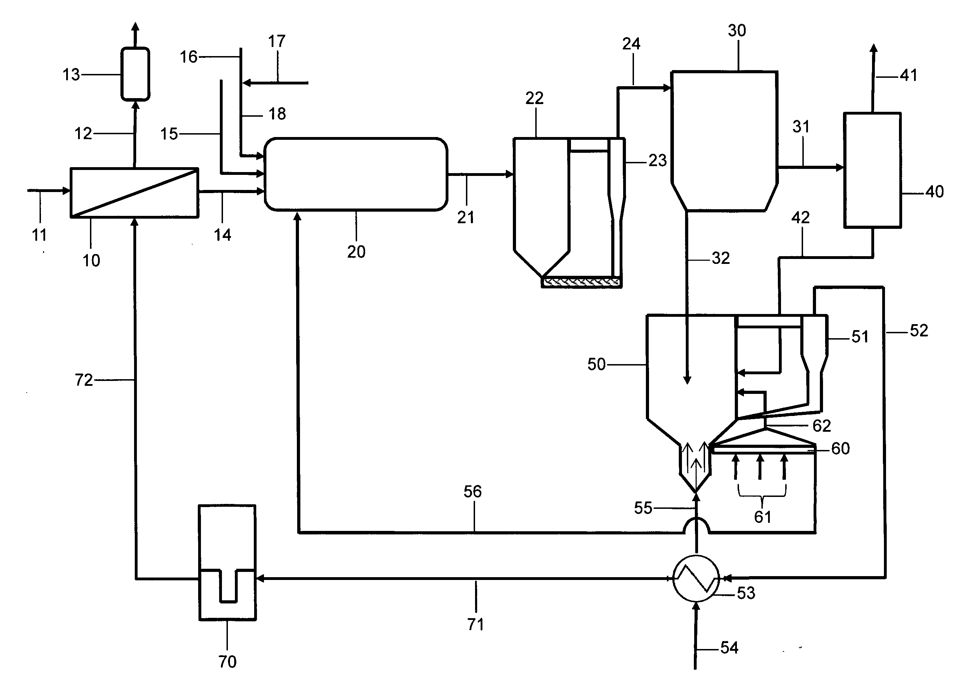

Fig. 1 shows a flow diagram of the method useful for understanding the invention.

In the method useful for understanding the invention as shown in Fig. 1, plastic wastes are transferred via conduit 11 into a device for heating these plastic wastes, which preferably is designed as extruder 10. In this device, the plastic wastes which contain at least 80 wt-% of polymethyl methacrylate, polypropylene, polystyrene, polyethylene terephthalate, polytetrafluoroethylene or mixtures of these polymers are heated to a temperature at which these plastic wastes are flowable. Via conduit 12, resulting gases are transferred into a chimney 13 and blown out of the same.

Via conduit 14, the heated plastic wastes are supplied to a reactor 20 which advantageously is formed as rotary kiln. This reactor 20 includes a bed which consists of sand, catalyst and adsorber. Via conduit 15, sand withdrawn from the reactor can be filled up again. Via conduit 16 catalyst and via conduit 17 adsorber is fed into conduit 18 and from there guided into the reactor 20.

In the reactor 20, the heated plastic wastes are pyrolyzed in the presence of the catalyst and the adsorber, whereby gases are generated. These gases are withdrawn via conduit 21 and supplied to a gas-solids separation system consisting of the separator 22 and the cyclone 23. The gas which here has already been roughly separated from the solids subsequently is supplied to an electric separator 30 via conduit 24. Via conduit 31, the gas purified further in the separator 30 then flows into at least one condensation device 40 in which the gas is cooled to such an extent that at least one monomer contained in the gas stream is condensed out and can then be withdrawn via conduit 41 as purified, liquid product. Via conduit 42, the remaining gas stream is supplied to a regeneration device 50.

Into this regeneration device 50 also those solids are delivered via conduit 32, which were separated in the electrostatic solids separator 30. Here, catalyst and adsorber are regenerated in the device 50 they are exposed to preheated air (up to 400°C) in a fixed or fluidized bed.

Entrained particles from the regenerator 50 are introduced into a cyclone 51 and from there are recirculatd into the regenerator 50 via conduit 52. The gases separated in the cyclone are supplied to a heat exchanger 53 via conduit 52 and to a further dust separator 70 via conduit 71. Via conduit 72, they can then be guided into the extruder 10 and thus improve the energy balance of the method, since less energy is required for heating the plastic wastes to their liquefaction temperature. On passage through the heat exchanger 53, that air is heated at the same time which is fed in via conduit 54 and conduit 55, in order to perform the regeneration in the regenerator 50.

Regenerated catalyst, adsorber and sand are withdrawn from the regenerator 50 via the device 60. By blowing in secondary air into the device 60 via a plurality of conduits 61, parts of this gas stream together with light particles are introduced into the regenerator 50 via conduit 62. Heavier particles together with parts of the gas blown in via conduit 61 are transported back into the reactor 20 via conduit 56. In the regenerator 50, deposits on the catalyst and/or the adsorber are burned at temperature between 600 and 700 °C, preferably at 650 °C.

### Exemplary embodiment

### (not according to the invention)

In a rotary kiln, about 20 kg of a preheated bed which contains a catalyst (ZSM-5) and CaCO₃ as an adsorber as well as at least 18 kg of sand (SiO₂) are mixed with about 1 kg/h of molten polystyrene from an extruder. The extruder operates as device for simultaneously melting and transporting the plastic in the rotary kiln. At the entry of the rotary kiln the temperature is about 450 °C, and the temperature at the end of the reactor is about 410 °C at atmospheric pressure. Inside the rotary kiln a product gas is obtained. This product gas is cooled in a condensation device and condensed out.

The duration of the laboratory experiment is 8 hours. As product, 0.9 to 0.95 kg/h of a dark brown liquid are produced. This product is examined with a gas chromatograph (GC) according to the standards ASTM 5135 D with the result that the liquid contains 85 % of styrenes (monomer, dimer, etc.) and 15 wt-% of residues (toluene, ethylbenzene, chromol, etc.).

### List of Reference Numerals

- 10: extruder
- 11, 12: conduit
- 13: chimney
- 14-18: conduit
- 20: reactor
- 21: conduit
- 22: separator
- 23: cyclone
- 24: conduit
- 30: electrostatic solids separator
- 31, 32: conduit
- 40: condenser
- 41,42: conduit
- 50: regeneration device
- 51: cyclone
- 52: conduit
- 53: heat exchanger
- 54-56: conduit
- 60: solids conveyor
- 61: conduit
- 62: conduit
- 70: filter
- 71, 72: conduit

## Claims

1. A method for recycling plastic wastes which for at least 80 wt-% contain a polymer or a mixture of polymers from a group consisting of polymethyl methacrylate, polypropylene, polyethylene, polystyrene, polyethylene terephthalate and/or polytetrafluoroethylene, comprising the following steps:
(i) heating the plastic wastes to a temperature at which they are flowable;
(ii) pyrolyzing the flowable plastics together with a catalyst and/or an adsorber and withdrawing the resulting gases;
(iii) condensing the gases,
**characterized in that** the condensation is performed in several stages, wherein the gases from the respective condensation stage first are supplied to a solids separator before they are subsequently guided into the next condensation stage.

2. The method according to claim 1, **characterized in that** hydrochloric acid is withdrawn during and/or after heating.

3. The method according to claim 1 or 2, **characterized in that** the liquefied plastic wastes are filtered before pyrolizing.

4. The method according to any of the preceding claims, **characterized in that** the catalyst consists of zeolite for at least 90 wt-%.

5. The method according to any of the preceding claims, **characterized in that** the adsorber consists of calcium oxide and/or magnesium oxide for at least 90 wt-%.

6. The method according to any of the preceding claims, **characterized in that** pyrolyzing is carried out at a temperature between 350 and 500 °C and atmospheric pressure.

7. The method according to any of the preceding claims, **characterized in that** the catalyst and/or the adsorber are separated before, during or after the condensing and recirculated into the reactor.

8. The method according to claim 7, **characterized in that** within the recirculation a regeneration of the catalyst and/or the adsorber is effected.

9. An apparatus for recycling plastic wastes which for at least 80 wt-% contain a polymer or a mixture of polymers from a group consisting of polymethyl methacrylate, polypropylene, polyethylene, polystyrene, polyethylene terephthalate and/or polytetrafluoroethylene, including a device for heating the plastic wastes to a temperature at which they are flowable, a reactor (20) for pyrolyzing the flowable plastic wastes together with a catalyst and/or an adsorber, said reactor including an outlet for resulting gases, and several condensation stages (40) for condensing the gases from the reactor, wherein a solids separator (22, 23) is located between each pair of said condensation stages.

10. The apparatus according to claim 9, **characterized in that** the device for heating is an extruder.

11. The apparatus according to claim 9 or 10, **characterized in that** the device for pyrolyzing is a rotary kiln.

12. The apparatus according to any of claims 9 to 11, **characterized in that** the reactor includes various heating zones.

## Patentansprüche

1. Ein Verfahren zum Recyceln von Kunststoffabfällen, die zu wenigstens 80 Gew.-% ein Polymer oder eine Mischung aus Polymeren aus der Gruppe enthalten, welche aus Polymethylmethacrylat, Polypropylen, Polyethylen, Polystyrol, Polyethylenterephthalat und/oder Polytetrafluorethylen besteht, mit folgenden Schritten:
(i) Erwärmen der Kunststoffabfälle auf eine Temperatur, bei welcher sie fließfähig sind;
(ii) Pyrolysieren der fließfähigen Kunststoffe zusammen mit einem Katalysator und/oder einem Adsorber und Abziehen der resultierenden Gase;
(iii) Kondensieren der Gase,
**dadurch gekennzeichnet, dass** die Kondensation in mehreren Stufen durchgeführt wird, wobei die Gase aus der jeweiligen Kondensationsstufe zunächst einem Feststoffseparator zugeführt werden, bevor sie anschließend in die nächste Kondensationsstufe geführt werden.

2. Das Verfahren nach Anspruch 1, **dadurch gekennzeichnet, dass** während und/oder nach dem Erwärmen Salzsäure abgezogen wird.

3. Das Verfahren nach Anspruch 1 oder 2, **dadurch gekennzeichnet, dass** die verflüssigten Kunststoffabfälle vor dem Pyrolysieren gefiltert werden.

4. Das Verfahren nach einem der vorhergehenden Ansprüche, **dadurch gekennzeichnet, dass** der Katalysator zu wenigstens 90 Gew.-% aus Zeolit besteht.

5. Das Verfahren nach einem der vorhergehenden Ansprüche, **dadurch gekennzeichnet, dass** der Adsorber zu wenigstens 90 Gew.-% aus Kalziumoxid und/oder Magnesiumoxid besteht.

6. Das Verfahren nach einem der vorhergehenden Ansprüche, **dadurch gekennzeichnet, dass** das Pyrolysieren bei einer Temperatur zwischen 350 und 500 °C und bei Umgebungsdruck durchgeführt wird.

7. Das Verfahren nach einem der vorhergehenden Ansprüche, **dadurch gekennzeichnet, dass** der Katalysator und/oder der Adsorber vor, während oder nach der Kondensation abgetrennt und in den Reaktor rezirkuliert wird/werden.

8. Das Verfahren nach Anspruch 7, **dadurch gekennzeichnet, dass** in der Rezirkulation eine Regeneration des Katalysators und/oder des Adsorbers durchgeführt wird.

9. Ein Verfahren zum Recyceln von Kunststoffabfällen, die zu wenigstens 80 Gew.-% ein Polymer oder eine Mischung von Polymeren enthalten aus der Gruppe, die aus Polymethylmethacrylat, Polypropylen, Polyethylen, Polystyrol, Polyethylenterephthalate und/oder Polytetrafluorethylen besteht, umfassend eine Vorrichtung zum Erwärmen der Kunststoffabfälle auf eine Temperatur, bei welcher diese fließfähig sind, einen Reaktor (20) zum Pyrolysieren der fließfähigen Kunststoffabfälle zusammen mit einem Katalysator und/oder einem Adsorber, wobei der Reaktor einen Auslass für resultierende Gase aufweist, und verschiedene Kondensationsstufen (40) zum Kondensieren der Gase aus dem Reaktor, wobei zwischen jedem Paar der Kondensationsstufen ein Feststoffseparator (22, 23) angeordnet ist.

10. Das Verfahren nach Anspruch 9, **dadurch gekennzeichnet, dass** die Vorrichtung zum Erwärmen ein Extruder ist.

11. Die Vorrichtung nach Anspruch 9 oder 10, **dadurch gekennzeichnet, dass** die Vorrichtung zum Pyrolysieren ein Drehrohrofen ist.

12. Das Verfahren nach einem der Ansprüche 9 bis 11, **dadurch gekennzeichnet, dass** der Reaktor verschiedene Heizzonen aufweist.

## Revendications

1. Procédé pour le recyclage des déchets plastiques qui pour au moins 80 % en poids contiennent un polymère ou un mélange de polymères à partir d'un groupe constitué du polyméthacrylate de méthyle, du polypropylène, du polyéthylène, du polystyrène, du polytéréphtalate d'éthylène et/ou du polytétrafluoroéthylène, comprenant les étapes suivantes :
(i) chauffer les déchets plastiques à une température à laquelle ils sont aptes à s'écouler ;
(ii) pyrolyser les plastiques aptes à s'écouler ensemble avec un catalyseur et/ou un absorbeur et retirer les gaz résultants ;
(iii) condenser les gaz,
**caractérisé en ce que** la condensation est effectuée en de nombreuses étapes, les gaz provenant de l'étape de condensation respective sont premièrement fournis à un séparateur de solides avant d'être subséquemment guidés dans l'étape de condensation suivante.

2. Procédé selon la revendication 1, **caractérisé en ce que** de l'acide chlorhydrique est retiré pendant et/ou après le chauffage.

3. Procédé selon la revendication 1 ou 2, **caractérisé en ce que** les déchets plastiques liquéfiés sont filtrés avant la pyrolyse.

4. Procédé selon l'une quelconque des revendications précédentes, **caractérisé en ce que** le catalyseur est composé de zéolite pour au moins 90 % en poids.

5. Procédé selon l'une quelconque des revendications précédentes, **caractérisé en ce que** l'absorbeur est composé d'oxyde de calcium, et/ou d'oxyde de magnésium pour au moins 90 % en poids.

6. Procédé selon l'une quelconque des revendications précédentes, **caractérisé en ce que** la pyrolyse est effectuée à une température comprise entre 350 et 500 °C et sous pression atmosphérique.

7. Procédé selon l'une quelconque des revendications précédentes, **caractérisé en ce que** le catalyseur et/ou l'absorbeur sont séparés avant, pendant et après la condensation et re-circulés au sein du réacteur.

8. Procédé selon la revendication 7, **caractérisé en ce qu'**a l'intérieur de la recirculation une régénération du catalyseur et/ou de l'absorbeur est effectuée.

9. Appareil pour recycler les déchets plastiques qui pour au moins 80 % en poids contiennent un polymère ou un mélange de polymères à partir d'un groupe constitué du polyméthacrylate de méthyle, du polypropylène, du polyéthylène, du polystyrène, du polytéréphtalate d'éthylène et/ou du polytétrafluoroéthylène, comprenant un dispositif pour chauffer les déchets plastiques à une température à laquelle ils sont aptes à s'écouler, un réacteur (20) pour pyrolyser les déchets plastiques aptes à s'écouler ensemble avec un catalyseur et/ou un absorbeur, ledit réacteur incluant une sortie pour les gaz résultants, et de nombreuses étapes de condensation (40) pour condenser les gaz depuis le réacteur, un séparateur de solides (22, 23) étant situé entre chaque paire desdites étapes de condensation.

10. Appareil selon la revendication 9, **caractérisé en ce que** le dispositif pour chauffer est une extrudeuse.

11. Appareil selon la revendication 9 ou 10, **caractérisé en ce que** le dispositif pour pyrolyser est un four rotatif.

12. Appareil selon l'une quelconque des revendications 9 à 11, **caractérisé en ce que** le réacteur inclut de nombreuses zones de chauffage.
